# EUROPEAN PATENT APPLICATION

(11) **EP 2 316 694 A2**
(43) Date of publication of application: **04.05.2011**
(21) Application number: 10188685.1
(22) Date of filing: 25.10.2010
(51) Int. Cl.: B60R 21/00

(54) **Vehicle collision sensing system, and a method of operating same**

(30) Priority: 29.10.2009 US 608020 P
(71) Applicant: Delphi Technologies, Inc., Troy, MI 48007 (US)
(72) Inventor: Cluff, Charles A., Zionsville, IN 46077 (US); Walden, Michael K., Carmel, IN 46033 (US); Perkins, Christopher E., Carmel, IN 46033 (US)
(74) Representative: Denton, Michael John

(57) **Abstract**

A vehicle collision sensing system having sensor modules distributed about the vehicle configured to receive initialization signals for coordinating communication with a control module over a time multiplexed communication network that is part of the control module. The control module has a switch that is open when a first sensor module is initialized and closed when a second sensor module is initialized so that each sensor module can be individually initialized or programmed after installation in the vehicle. By individually initializing each sensor module after the sensor modules are installed in the vehicle, identical sensor modules can be installed at various locations about the vehicle and thereafter initialized to make each sensor module unique.

## Description

### TECHNICAL FIELD

The invention relates to a vehicle collision sensing system comprising multiple collision sensor modules connected to a control module having a controller and a communication network. More particularly, this invention relates to such system configured to allow each sensor module to receive a unique initialization signal for communicating with the controller.

### BACKGROUND OF INVENTION

It is known to equip an automotive vehicle with multiple sensor modules for detecting a collision event. The sensor modules are located in various locations about the vehicle and provide a collision signal indicative of the point of collision. The sensor modules are connected to a control module that receives the collision signals and deploys appropriate safety devices, such as airbags, depending upon the collision signals. The collision signals are time multiplexed to coordinate signals from the individual sensor modules. For this purpose, each sensor module regulates the timing of the collision signal to the appropriate time slot following a synchronization signal from the controller. One approach is to preprogram each sensor module depending upon its location on the vehicle following assembly. This requires a sensor module that is uniquely programmed for each location on the vehicle, which proliferates the number of components and increases warehousing and component tracking costs. However, except for the preprogramming, the sensor modules are identical in construction and operation. By installing identical sensor modules in the several locations, and programming the sensor modules after installation, the number of parts that must be separately tracked is reduced, resulting in significant cost savings. However, it is critical that each sensor module receives the appropriate initialization signal for its location in order that the controller is able to accurately process the collision signal. Moreover, it is desired to assemble sensor modules with less expensive volatile memory. Using volatile memory requires that an initialization signal be sent to each sensor module each time that the system in powered, such as when the vehicle ignition is turned on.

What is needed is a vehicle collision sensing system that makes use of multiple identical sensor modules arranged at various locations about the vehicle and interconnected through a communications network. The identical sensors need to be initialized based on vehicle location, so such a system would isolate each sensor module for initialization, and provide an initialization signal to each of the identical sensor modules so each sensor module can be uniquely configured.

### SUMMARY OF THE INVENTION

In one aspect, this invention provides a control module for use in a vehicle collision sensing system. The control module bein comprises a controller adapted to output a plurality of initialization signals and receive a plurality of collision signals and a communication network comprising a plurality of connections, each connection for coupling the controller to a sensor module to communicate an initialization signal and a collision signal. One of the connection includes a switch adapted to be open to prevent communication with one of the sensor module during output of an initialization signal, and closed to allow communication with said sensor module following said initialization signal. The switch is an electronic switch having an open state to prevent communication and a closed state to allow communication the switch being adapted to receive a switch control signal effective to open the switch or close the switch, the controller being further adapted to output the switch control signals. The controller comprises a network communication port connected to the communication network, the network communication port being configured to output the initialization signals, and to receive the collision signals. Each initialization signal is configured to program a volatile memory in each sensor module. The initialization signals are output by the controller each time the vehicle is turned on. The controller is further adapted to output a signal for deploying an occupant protection device based on the collision signals. The controller and the sensor modules are further adapted to communicate in a time multiplexed manner. The controller is configured to output a synchronization signal, each initialization signal determining a time slot following the synchronization signal for each sensor module to output a collision signal to the controller.

The invention is also related to a vehicle collision sensing system comprising a plurality of sensor modules each configured to receive a initialization signal and to output a collision signal indicative of a collision event; and a control module as previously described.

The invention is further related to a method of operating a vehicle collision sensing system as set in claim 8, the method comprising the steps of:
opening the switch;
outputting a first initialization signal when the switch is open;
closing the switch; and
outputting a second initialization signal when the switch is closed.
It also comprises the step of
configuring the controller, said step including configuring a network communication port for outputting the initialization signals and receiving the collision signals.
storing each initialization signal in a volatile memory associated with each sensor module. Outputting the initialization signals occur each time the vehicle is turned on.

The method further comprises the steps of:
receiving the collision signals and
outputting a signal for deploying an occupant protection device based on the collision signals.
outputting a synchronization signal by the controller;
outputting a first collision signal during a first time slot following the synchronization signal, wherein the first initialization signal determines the first time slot; and
outputting another collision signal during another time slot following the synchronization signal, wherein said other initialization signal determines said other time slot.

Further features and advantages of the invention will appear more clearly on a reading of the following detail description of the preferred embodiment of the invention, which is given by way of non-limiting example only and with reference to the accompanying drawings.

### BRIEF DESCRIPTION OF DRAWINGS

This invention will be further described with reference to the accompanying drawings in which:

Fig. 1 is a schematic diagram of a vehicle collision sensing system in accordance with this invention;

Fig. 2 is a timing diagram of switch control signals associated with Fig. 1;

Fig. 3 is a flow chart of a method of operating the system in Fig. 1; and

Fig. 4 is a timing diagram of time multiplexed signals associated with Figs. 1.

### DESCRIPTION OF THE PREFERRED EMBODIMENT

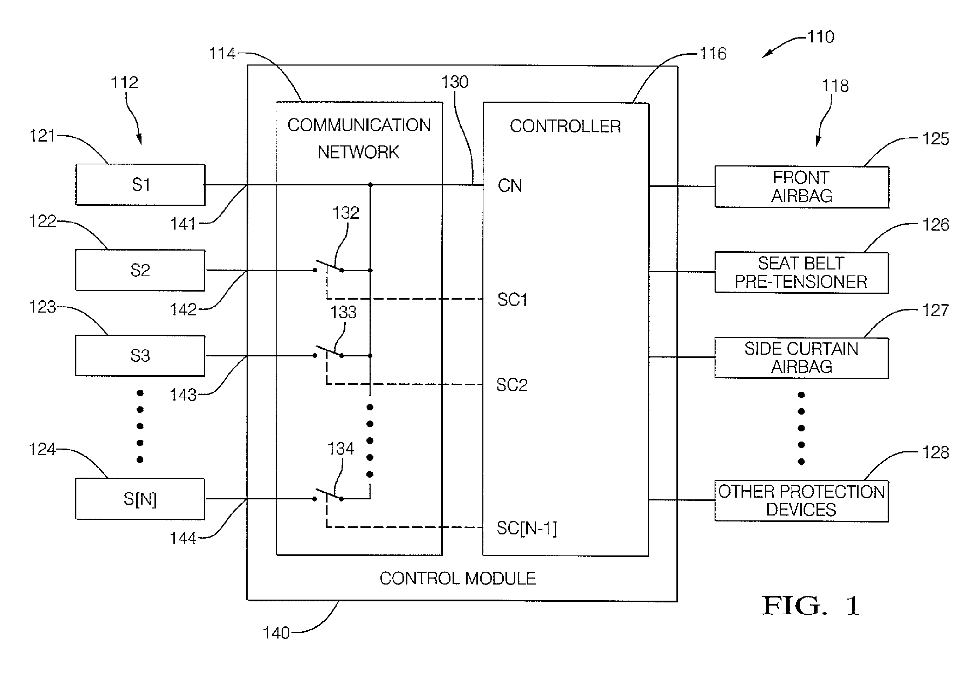

Referring to Fig. 1, in accordance with a preferred embodiment of this invention, a vehicle collision sensing system 110 for use in a vehicle is illustrated. The system 110 has a control module 140 that receives collision signals from two or more sensor modules 112 arranged about the vehicle, and activates one or more occupant protection devices 118 based on characteristics of a collision event indicated by the collision signals. For example, deployment of a front airbag 125 located in the vehicle steering wheel or in the vehicle dashboard forward of a front seat passenger may be appropriate if the collision signals indicate a collision with the front of the vehicle. Alternately, deployment of a side curtain airbag 127 may be appropriate if the collision signals indicate a collision with the side of the vehicle or a vehicle rollover. As illustrated, control module 140 may also activate a seat belt pre-tensioner 126, or any number of other protection devices 128.

Sensor modules 112 communicate with control module 140 in a time-multiplexed manner over a communication network 114. Some or all of sensor modules 112 may be identical in construction, and each requires initialization to at least assign a unique time slot so the time-multiplexed communication of collision signals is coordinated. Sensor modules 112 may also be initialized to uniquely configure a sensor module for a location on the vehicle. Sensor modules 112 may include volatile memory that needs to be initialized each time power is applied, such as each time the vehicle is turned on. As such, a first sensor module 121 is configured to receive a first initialization signal to program first sensor module 121 with a unique first time slot. After receiving the first initialization signal, first sensor module 121 is configured to output a first collision signal indicative of a collision event. Likewise, a second sensor module 122 is configured to receive a second initialization signal to program second sensor module 122 with a unique second time slot. After receiving the second initialization signal, second sensor module 122 is configured to output a second collision signal indicative of a collision event. A third sensor module 123 and an additional sensor module 124 may also be similarly configured.

Control module 140 is adapted to output the first initialization signal to initialize first sensor module 121, and output the second initialization signal to initialize second sensor module 122. Control module 140 is also adapted to receive the first collision signal from first sensor module 121, and receive the second collision signal from second sensor module 122. Control module 140 includes a controller 116 having a network connection port CN configurable to output the first initialization signal and the second initialization signal, and receive the first collision signal and the second collision signal, and a logic unit configurable to process the collision signals to determine if any occupant protection devices 118 should be activated. Controller 116 may also have a memory device for storing program instructions and vehicle collision characterization data. In this embodiment, controller 116 is preferably a commercially available controller configurable to process the collision signals to determine output signals for activating occupant protection devices 118.

Control module 140 also includes a communication network 114 having a first connection 141 for coupling control module 140 to first sensor module 121 to communicate the first initialization signal and the first collision signal, and a second connection 142 for coupling control module 140 to second sensor module 122 to communicate the second initialization signal and the second collision signal. Second connection 142 has a switch 132 disposed between controller 116 and second sensor module 122 that is adapted to be open to prevent communication with second sensor module 122 during the output of the first initialization signal, and closed to allow communication with second sensor module 122 following the output of the first initialization signal.

Sensor modules 112 are preferably configured to accept an initialization signal if it has not been initialized; and once initialized, ignore any subsequent initialization signals. By configuring a sensor module to ignore subsequent initialization signals, each sensor module may remain connected to controller 116 once it has been initialized, and so will not change an initialization based on initialization signals intended for other sensor modules. Alternately, sensor modules may be configured to receive multiple initialization signals and have an initialization based on the last received initialization signal. For this sensor module configuration, all of the connections would be configured to open and close so each connection could be closed to initialize the corresponding sensor module and then opened so the sensor module would not receive any subsequent initialization signals. For either sensor module configuration, after sensor modules 112 are initialized, the connections are closed and vehicle collision sensing system 110 is ready to determine a collision based on the collision signals, and activate the appropriate occupant protection devices 118.

Switch 132 has an open state that effectively prevents communication, and a closed state that effectively allows communication. Switch 132 may suitably be an electronic switch, a relay actuating a mechanical switch, or a network of logic gates or buffers that are configured to be activated to pass a signal and deactivated to block a signal. Switch 132 is preferably an electronic switch, such as a MOSFET, since electronic switches are less expensive and more reliable than relays. Switch 132 is adapted to receive a switch control signal effective to select the open state or the closed state. Such a switch control signal originates within control module 140, and so controller 116 may be equipped with a switch control port SC1.

In this embodiment, vehicle collision sensing system 110 may include a third sensor module 123 configured to receive a third initialization signal to initialize third sensor module 123. Following initialization, third sensor module 123 outputs a third collision signal indicative of a collision event. If third sensor module is included, control module 140 is further adapted to output the third initialization signal and receive the third collision signal, and communication network 114 includes a third connection 143 for coupling control module 140 to third sensor module 123 to communicate the third initialization signal and the third collision signal. Third connection 143 includes a switch 133 disposed between controller 116 and third sensor module 123 that is adapted to be open to prevent communication with the third sensor module during output of the first initialization signal and the second initialization signal, and closed to allow communication with the third sensor module following the first initialization signal and the second initialization signal.

Vehicle collision sensing system 110 may also include additional sensor modules. Referring to sensor module 124, for each such additional sensor module, communication network 114 has an additional connection 144 adapted to be open to prevent communication with additional sensor module 124 during output of all of the other initialization signals except for an additional initialization signal, and closed to allow communication with additional sensor module 124 following all of the initialization signals. This process of opening all connections prior to sequentially initializing one sensor at a time by closing a connection following initialization of a previously connected sensor module can be extended to any number of sensor modules. Likewise, controller 116 has an additional switch control ports SC [N-1].

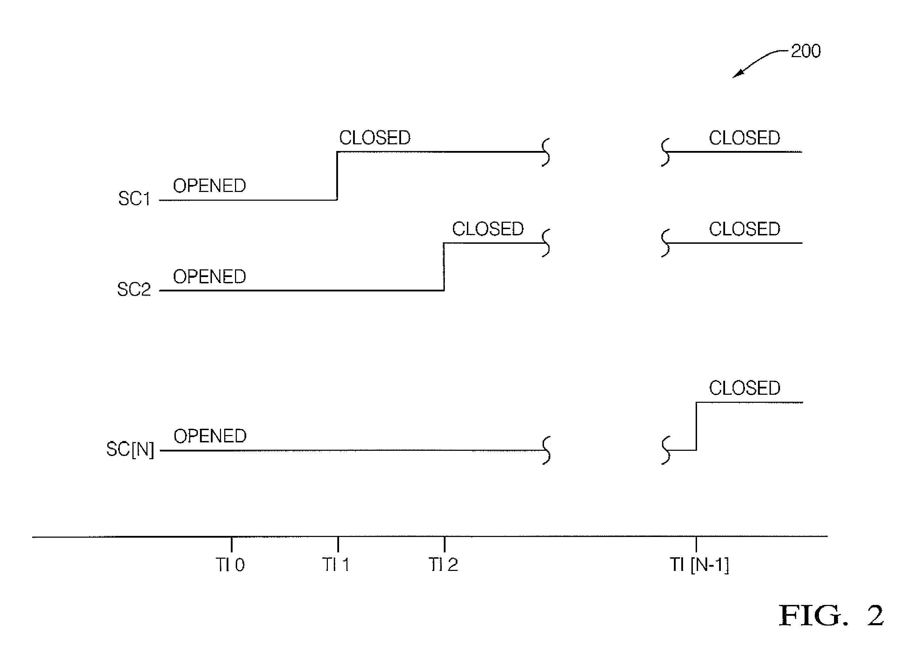

Fig. 2 illustrates an initialization timing diagram 200 for the switch control signals SC1, SC2, and SC[N-1]. By way of an example, when the vehicle is started, all of switches 132-134 are opened so that only first sensor module 121 (S1) is connected to control module 140. At a time around TI0, first sensor module 121 (S1) receives the first initialization signal from control module 140 and so is initialized. After first sensor module 121 (S1) is initialized, switch 132 is closed at TI1, and thereafter second sensor module 122 (S2) is initialized. This process of closing a switch followed by initializing the sensor module connected to the switch just closed is repeated until after TI[N-1] when additional switch 134 is closed so that additional sensor module 124 (S[N]) can be initialized, whereupon all sensor modules 112 are initialized.

In this embodiment, sensor modules 112 may be equipped with volatile memory. Volatile memory is desirable since it is less expensive than non-volatile memory. Sensor modules 112 are adapted to be initialized after being installed in the vehicle. As such, first sensor module 121 has a first volatile memory that is suitable for programming by the first initialization signal and second sensor module 122 has a second volatile memory that is suitable for programming by the second initialization signal. Volatile memory relies on electrical power to maintain the memory content. When power is removed from sensor modules 112, power to the volatile memory is lost, so the initialization data is lost. As such, the first initialization signal and the second initialization signal may be output by the controller each time the vehicle ignition is switched on.

Alternately, sensor modules may be equipped with non-volatile memory. Once a sensor module with non-volatile memory is initialized, the initialization is not lost when power is removed. Non-volatile memory would be useful for retaining data such as hours of operation by the sensor module, or a record of a recent collision detected by the sensor module.

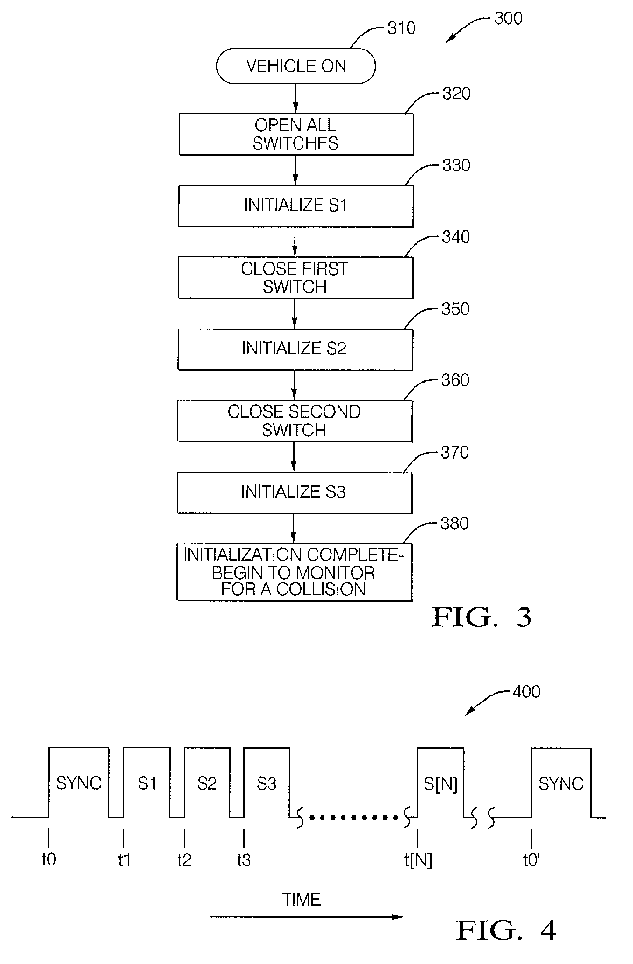

Fig. 3 is a flowchart 300 illustrating a method for initializing a vehicle collision sensing system having three sensor modules (S1,S2, and S3). If a vehicle collision sensing system had more or less than three sensors, the number of steps in flowchart 300 would be increased or decreased appropriately. At step 310, the vehicle is turn on. Turning the vehicle on may be starting the vehicle, or turning an ignition key to the run or accessory position. Turning the vehicle on includes supplying power to the vehicle collision sensing system. At step 320, switches 132,133 are opened in preparation for initializing sensor modules 112. At step 330, while the switches are open, first sensor module 121 (S1) is initialized. Initialization assigns a time slot for the sensor to output sensor status information, and may include assigning an identification code to the sensor being initialized. At step 340, following the initialization of S1, first switch 132 is closed so sensor module 122 is connected to control module 140 in preparation for outputting the second sensor initialization signal. At step 350, second sensor module 122 (S2) is initialized. At step 360, second switch 133 is closed. At step 370, third sensor module 123 (S3) is initialized. If additional sensor modules were present, this sequence of closing a switch and initializing each sensor module connected to the switch is repeated until all of the sensor modules have been initialized. At step 380, after all of sensor modules 112 are initialized, the control module 140 begins to monitor signals output by the sensor modules for an indication of a vehicle collision.

A method of operating a vehicle collision sensing system may also include the step of receiving a switch control signal from a switch control port (SC1,SC1, SC[N-1]) in controller 116 for closing a connection (142-144) or closing a switch (132-134). Such a method may also include outputting a switch control signal by control module 140.

If sensor modules 112 are equipped with volatile memory, a method of operating vehicle collision sensing system 110 may include the step of storing the first initialization signal in a first volatile memory associated with first collision module 121, and storing the second initialization signal in a second volatile memory associated with second collision module 122. This storing step may be repeated each time the vehicle is turned on. After the initialization of collision module 112 is complete, the method of operating vehicle collision sensing system 110 may include control module 140 receiving the first collision signal and the second collision signal, and outputting a signal for deploying an occupant protection device 118 based on the first collision signal and the second collision signal.

Vehicle collision sensing system 110 may be configured such that control module 140, first sensor module 121, and second sensor module 122 communicate in a time multiplexed manner. As such, a method of operating vehicle collision sensing system 110 may include control module 140 outputting a synchronization signal (SYNC) that is received by sensor modules 112 to establish a temporal reference for timing the output of collision signals. Following the synchronization signal, first sensor module 121 outputs the first collision signal (S1) during a first time slot following the synchronization signal, wherein the first initialization signal determines the first time slot; and second sensor module 122 outputs the second collision signal (S2) during a second time slot following the synchronization signal, wherein the second initialization signal determines the second time slot.

Fig. 4 illustrates an exemplary signal timing envelop 400 for one communication cycle of the time-multiplexed signals occurring on conductor 130 within communication network 114 when the vehicle collision sensing system 110 is operating to detect a collision. The signals (SYNC, S1, S2, ...) are output onto conductor 130 by controller 116 and sensor modules 112. A communication cycle is the time period from t0 to t0 Starting at time t0, a synchronization signal or synchronization pulse (SYNC) is output by controller 116. The signal envelope labeled SYNC may contain a series of pulses forming a serial digital signal supplying system status information from controller 116, or may simply be a single pulse. Following the SYNC, first sensor module 121 outputs a first collision signal S 1 beginning at time t1 that may include sensor identification, sensor module status, and a sensor reading value. It is understood that S1, as illustrated, is an envelope of a reserved timeslot for a single pulse or series of pulses, either voltage or current, forming a first collision signal. Beginning at a time t2, second sensor module 122 outputs a second collision signal within the signal envelope designated as S2. Similarly, a third sensor module may output a third sensor module S3 signal beginning at time t3. The signal timing envelope 400 continues until all of the sensor modules in the system have output a collision sensor signal. This communication cycle containing the illustrated sequence of signals repeats starting again at t0' with another SYNC signal. Prior to t0 each sensor must be initialized or preprogrammed, wherein each sensor is assigned a unique time slot to output a collision signal during the communication cycle. A unique time slot for each collision signal is necessary so that two sensor modules do not try to output a collision signal at the same time.

Fig. 1 illustrates controller 116 and communication network 114 within a control module 140 that may be a common housing or common circuit board assembly. Switches 132-134 are located preferably within control module 140 to avoid the cost of providing extra wiring throughout the vehicle for each switch control signals SC1, SC2, thru SC[N-1]. However, communication network 114 may located apart from controller 116, physically close to sensor modules 112 for example, and the switch control signals SC1, SC 2, and SC [N-1] could be communicated serially over a single wire.

Therefore, a vehicle collision sensing system that individually initializes identical or similar sensor modules is provided. By using identical or similar sensor modules, manufacturing and inventory costs are reduced since each sensor module is not unique to a location on a vehicle. Identical sensor modules can be mounted in several different locations on the vehicle, and the system later initializes each sensor module to be unique. The initialization of each sensor occurs every time the vehicle is started, so the system automatically adapts to a sensor module being replaced, and can detect if a sensor module is damaged and needs to be replaced or repaired. Also, the vehicle collision sensing system has connections that selectively isolate each sensor module so each of the sensor modules connected to the communication network can be isolated and readily initialized.

While this invention has been described in terms of the preferred embodiments thereof, it is not intended to be so limited, but rather only to the extent set forth in the claims that follow.

## Claims

1. A control module (140) for use in a vehicle collision sensing system (110) the control module (140) being **characterized in that** it comprises:
a controller (116) adapted to output a plurality of initialization signals and receive a plurality of collision signals; and
a communication network comprising a plurality of connections, each connection for coupling the controller (116) to a sensor module (112) to communicate an initialization signal and a collision signal, wherein one of the connection includes a switch (132) adapted to be open to prevent communication with one of the sensor module (112) during output of an initialization signal, and closed to allow communication with said sensor module following said initialization signal.

2. The control module (140) in accordance with claim 1, wherein the switch (132) is an electronic switch having an open state to prevent communication and a closed state to allow communication the switch being adapted to receive a switch control signal effective to open the switch or close the switch, the controller (116) being further adapted to output the switch control signals.

3. The control module (140) in accordance with any of the preceding claim, wherein the controller (116) comprises a network communication port connected to the communication network, the network communication port being configured to output the initialization signals, and to receive the collision signals.

4. The control module (140) in accordance with any of the preceding claim, wherein each initialization signal is configured to program a volatile memory in each sensor module (112).

5. The control module (140) in accordance with any of the preceding claim, wherein the initialization signals are output by the controller (116) each time the vehicle is turned on.

6. The control module (140) in accordance with any of the preceding claim, wherein the controller (116) is further adapted to output a signal for deploying an occupant protection device based on the collision signals.

7. The control module (140) in accordance with any of the preceding claim, wherein the controller (116) and the sensor modules are further adapted to communicate in a time multiplexed manner, the controller (116) being configured to output a synchronization signal, each initialization signal determining a time slot following the synchronization signal for each sensor module (112) to output a collision signal to the controller (116).

8. A vehicle collision sensing system (110) comprising:
a plurality of sensor modules (112) each configured to receive a initialization signal and to output a collision signal indicative of a collision event; and
a control module (140) as set in any of the preceding claim.

9. A method of operating a vehicle collision sensing system as set in claim 8, the method comprising the steps of:
opening the switch (132) ;
outputting a first initialization signal when the switch (132) is open;
closing the switch (132); and
outputting a second initialization signal when the switch (132) is closed.

10. The method in accordance with claim 9, further comprising the step of configuring the controller (116), said step including configuring a network communication port for outputting the initialization signals and receiving the collision signals.

11. The method as set in any of the claim 9 or 10, further comprising the step of storing each initialization signal in a volatile memory associated with each sensor module (112).

12. The method as set in any of the claim 9 to 11, wherein the steps of outputting the initialization signals occur each time the vehicle is turned on.

13. The method in accordance as set in any of the claim 9 to 12, further comprising the steps of:
receiving the collision signals and
outputting a signal for deploying an occupant protection device based on the collision signals.

14. The method in accordance as set in any of the claim 9 to 13, further comprising the steps of:
outputting a synchronization signal by the controller;
outputting a first collision signal during a first time slot following the synchronization signal, wherein the first initialization signal determines the first time slot; and
outputting another collision signal during another time slot following the synchronization signal, wherein said other initialization signal determines said other time slot.
